(19) Europäisches Patentamt / European Patent Office / Office européen des brevets

(11) **EP 4 074 889 B1**

(12) **EUROPEAN PATENT SPECIFICATION**

(45) Date of publication and mention
of the grant of the patent:
**17.07.2024   Bulletin 2024/29**

(21) Application number: **20898710.7**

(22) Date of filing: **26.11.2020**

(51) International Patent Classification (IPC):
*D07B 1/06* (2006.01)          *B60C 9/22* (2006.01)
*B60C 1/00* (2006.01)          *B60C 11/00* (2006.01)
*C08L 21/00* (2006.01)          *B60C 9/20* (2006.01)

(52) Cooperative Patent Classification (CPC):
(C-Sets available)
**B60C 1/0016; B60C 9/2009; B60C 11/005;
C08L 9/00; C08L 9/06;** B60C 2009/2016;
B60C 2009/2067; B60C 2009/2077;
B60C 2009/2083; B60C 2009/2096;
B60C 2011/0025; B60C 2200/04; Y02T 10/86

(Cont.)

(86) International application number:
**PCT/JP2020/043931**

(87) International publication number:
**WO 2021/117491 (17.06.2021 Gazette 2021/24)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **13.12.2019   JP 2019225832**

(43) Date of publication of application:
**19.10.2022   Bulletin 2022/42**

(73) Proprietor: **BRIDGESTONE CORPORATION
Chuo-ku
Tokyo 104-8340 (JP)**

(72) Inventor: **MATSUMOTO Kyohei
Tokyo 104-8340 (JP)**

(74) Representative: **Marks & Clerk LLP
15 Fetter Lane
London EC4A 1BW (GB)**

(56) References cited:
**WO-A1-2016/098505          WO-A1-2017/203766
WO-A1-2018/190308          WO-A1-2018/190309
JP-A- 2010 247 738          JP-A- 2017 210 191
JP-A- 2019 116 574          JP-A- H01 174 547
US-A1- 2013 206 302**

(52) Cooperative Patent Classification (CPC): (Cont.)

C-Sets
**C08L 9/00, C08L 7/00, C08K 3/04;**
**C08L 9/06, C08L 7/00, C08K 3/04**

C-Sets
**C08L 9/00, C08L 7/00, C08K 3/04;**
**C08L 9/06, C08L 7/00, C08K 3/04**

**Description**

TECHNICAL FIELD

The present invention relates to a tire, more particularly a pneumatic tire including a belt layer formed by coating a reinforcing element, which contains plural metal filaments that are aligned without being twisted together, with an elastomer.

BACKGROUND ART

Generally, inside a tire that requires strength, a carcass that includes reinforcing cords embedded along the meridian direction of a ring-shaped tire main body is arranged, and a belt layer is arranged on the tire radial-direction outer side of the carcass. This belt layer is usually formed using an elastomer-metal cord composite obtained by coating a metal cord such as a steel cord with an elastomer, and imparts the tire with load resistance, traction resistance, and the like.

In recent years, there is an increasing demand for weight reduction of tires for the purpose of improving the fuel efficiency of automobiles. As a means for reducing the tire weight, metal cords for belt reinforcement have been drawing attention, and a large number of technologies for using metal filaments as a belt cord without twisting have been disclosed. For example, Patent Document 1 discloses: a steel cord for tire reinforcement, in which the periphery of a steel cord main body composed of a single monofilament is coated with a thermoplastic elastomer composition obtained by dispersing an elastomer in a thermoplastic resin; and a tire including the same. Further, Patent Document 2 discloses a pneumatic radial tire including a steel cord in a belt layer of the tire, in which steel cord two to six main filaments of the same diameter are arranged parallel without being twisted together in such a manner to constitute a single layer as a main filament bundle, and a single straight steel filament of a smaller diameter than the main filaments is wound around the main filament bundle as a wrapping filament.

Moreover, technologies of improving a base tread, which is a rubber component constituting a base portion of a tire tread, for enhancement of the fuel efficiency of an automobile are known. For example, Patent Document 3 discloses a technology of applying a rubber composition, in which the heat build-up property is improved, i.e., the $\tan\delta$ is reduced, by adjustment of a rubber component and a filler, to a base tread.

Attention is also drawn to the disclosures of documents US 2013/206302 A1, JP 2010 247738 A, WO 2016/098505 A1 and JP H01 174547 A.

RELATED ART DOCUMENTS

PATENT DOCUMENTS

   [Patent Document 1] JP 2010-053495A
   [Patent Document 2] JP 2012-106570A
   [Patent Document 3] JP 2016-006135A

SUMMARY OF THE INVENTION

PROBLEMS TO BE SOLVED BY THE INVENTION

Various studies have been conducted on improvement of tires as described above; however, they are still not sufficient, and there is a demand for realizing a tire which not only has low rolling resistance and excellent separation resistance as well as high belt in-plane rigidity but also can reduce so-called pass-by noise that is the noise generated from a tire of a passing vehicle.

In this respect, as described in Patent Documents 1 and 2, by coating a metal monofilament with an elastomer to form a belt cord, not only a weight reduction can be achieved through a reduction in the belt gauge but also the belt in-plane rigidity can be improved, and the use of such monofilaments in the form of bundles enables to improve the resistance to belt edge separation (BES) by ensuring a distance between the monofilament bundles. However, in Patent Documents 1 and 2, the problems of rolling resistance and pass-by noise are not examined. Further, as described in Patent Document 3, a reduction in the loss tangent (tan6) of a rubber composition has a problem of worsening the pass-by noise, although it can improve the rolling resistance.

In view of the above, an object of the present invention is to provide a tire that has low rolling resistance, excellent separation resistance, high belt in-plane rigidity, and also can reduce pass-by noise.

MEANS FOR SOLVING THE PROBLEMS

The present inventor intensively studied to solve the above-described problems and consequently discovered that the problems can be solved by using a reinforcing element, which contains plural metal filaments that are aligned in a single row without being twisted together, in a belt layer, and using a rubber composition satisfying prescribed physical property values in a base tread of a tread portion, thereby completing the present invention.

That is, the present invention is provided by a tire according to claim 1.

In the tire of the present invention, the above-described reinforcing element is preferably a metal filament bundle including 2 to 20 metal filaments. Further, in the tire of the present invention, a minimum gap distance between the metal filaments is preferably 0.01 mm or more but less than 0.24 mm. Still further, in the tire of the present invention, a maximum gap distance between the metal filaments is preferably 0.25 mm to 2.0 mm. Yet still further, in the tire of the present invention, the metal filaments preferably have a diameter of 0.15 mm to 0.40 mm.

Yet still further, in the tire of the present invention, the above-described 30°C tan$\delta$ is preferably 0.075 to 0.220, and the above-described 0°C tan$\delta$ is preferably 0.200 to 0.625.

In the tire of the present invention, the rubber composition contains, as a rubber component, a styrene-butadiene rubber having a styrene content of not less than 26% by mass. It is preferred that the rubber composition further contain a natural rubber as a rubber component; and it is also more preferred that the rubber composition further contain a butadiene rubber as a rubber component. It is particularly preferred that the rubber composition contains, as rubber components, 10 to 75% by mass of the natural rubber, 10 to 75% by mass of the butadiene rubber, and 15 to 60% by mass of the styrene-butadiene rubber.

EFFECTS OF THE INVENTION

According to the present invention, a tire that has low rolling resistance, excellent separation resistance, high belt in-plane rigidity, and also can reduce pass-by noise was provided.

BRIEF DESCRIPTION OF THE DRAWINGS

[FIG. 1] FIG. 1 is a schematic half cross-sectional view illustrating a tire according to one preferred embodiment of the present invention.

[FIG. 2] FIG. 2 is a widthwise partial cross-sectional view of a belt layer according to one preferred embodiment of the present invention.

[FIG. 3] FIG. 3 is a schematic plan view illustrating a metal cord according to one example of the constitution of a reinforcing element in the belt layer illustrated in FIG. 2.

[FIG. 4] FIG. 4 is a schematic plan view illustrating a metal cord according to another example of the constitution of a reinforcing element that can be applied to a belt layer in the present invention.

[FIG. 5] FIG. 5 is a schematic plan view illustrating a metal cord according to yet another example of the constitution of a reinforcing element that can be applied to a belt layer in the present invention.

MODE FOR CARRYING OUT THE INVENTION

The tire of the present invention will now be described in detail referring to the drawings.

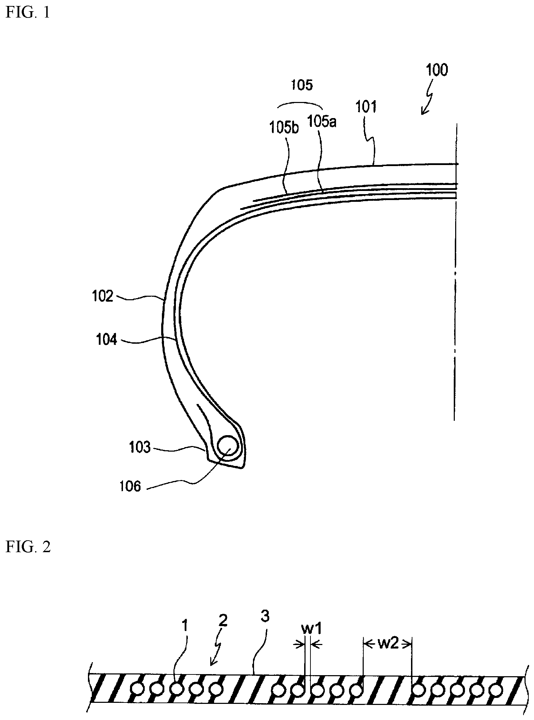

FIG. 1 is a schematic half cross-sectional view illustrating a tire according to one preferred embodiment of the present invention. An illustrated tire 100 is a pneumatic tire including: a tread portion 101 which forms a ground-contact part; a pair of side wall portions 102 which continuously extend inward in the tire radial direction on the respective sides of the tread portion 101; and bead portions 103 which continuously extend on the inner circumferential side of each side wall portion 102.

As illustrated, the tire of the present invention has, as a skeleton, a carcass 104 which is constituted by at least one carcass ply (a single carcass ply in the illustrated example) that toroidally extends between a pair of the bead portions 103 and reinforces the tread portion 101, the side wall portions 102, and the bead portions 103. In addition, on the tire radial-direction outer side of the carcass 104 in a crown portion, a belt 105 which is constituted by at least one belt layer reinforcing the tread portion 101 (a first belt layer 105a and a second belt layer 105b in the illustrated example) is arranged. It is noted here that the number of carcass plies may be two or more, and the number of belt layers may be two or more, or three or more.

In the present invention, it is important that the belt 105 be formed by a belt layer obtained by coating a reinforcing element, which contains plural metal filaments that are aligned in a single row without being twisted together, with an elastomer; and that a base tread of the tread portion 101 be formed by a rubber composition that satisfies the physical property values described below in detail. By these features, as described below, it was made possible to realize a tire that has low rolling resistance, excellent separation resistance, high belt in-plane rigidity, and also can reduce pass-by noise.

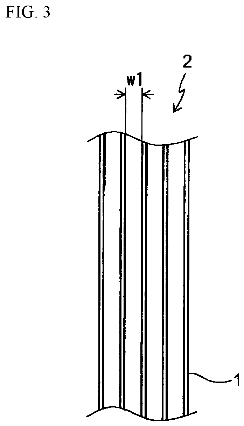

First, the constitution of the belt layer according to the tire of the present invention will be described in detail referring to the drawings. FIG. 2 is a widthwise partial cross-sectional view of a belt layer according to one preferred embodiment of the present invention. Further, FIG. 3 is a schematic plan view illustrating a metal cord according to one example of the constitution of a reinforcing element in the belt layer illustrated in FIG. 2.

The belt layer according to the present invention is formed by coating a reinforcing element 2, which contains plural metal filaments 1 that are aligned in a single row without being twisted together, with an elastomer 3 for belt layer. By adopting this constitution, the thickness of the belt layer can be reduced, so that not only the weight of the tire can be reduced but also the belt in-plane rigidity can be improved.

In the illustrated example, the reinforcing element 2 is a metal cord 2 composed of a bundle of plural metal filaments 1 that are aligned in a single row without being twisted together; however, the present invention is not limited to this constitution. In the reinforcing element 2 of the present invention, the plural metal filaments 1 that are aligned in a single row without being twisted together may be arranged evenly. Particularly, it is preferred that the reinforcing element 2 be the metal cord 2 composed of a bundle of plural metal filaments 1 that are aligned in a single row without being twisted together.

In the present invention, it is preferred that the metal filaments 1 in the belt layer be substantially straight metal filaments; however, metal filaments that are two-dimensionally patterned in an undulating shape or a zigzag shape, or metal filaments that are three-dimensionally patterned in a spiral shape may be used as well. The term "straight metal filament" used herein refers to a metal filament that has not been intentionally patterned and is thus in a state of having no substantial shape.

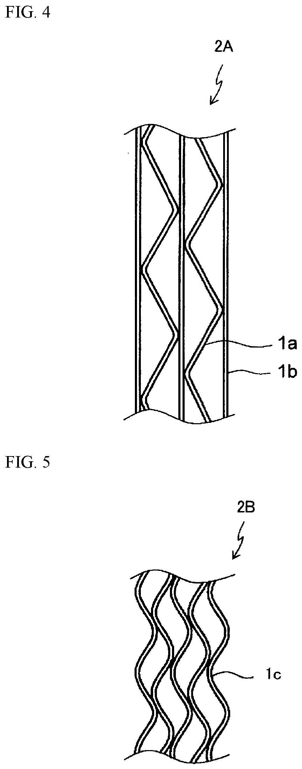

FIGs. 4 and 5 each show a schematic plan view illustrating a metal cord according to another example of the constitution of a reinforcing element that can be applied to a belt layer in the present invention. A metal cord 2A illustrated in FIG. 4 is formed by alternately arranging unpatterned straight metal filaments 1b and metal filaments 1a patterned in a zigzag shape. A metal cord 2B illustrated in FIG. 5 is formed by alternately arranging metal filaments 1c, which are patterned in an undulating shape, such that the phase varies between adjacent metal filaments.

When the reinforcing element 2 is the metal cord 2 composed of a bundle as illustrated, the metal cord 2 is constituted by a metal filament bundle of preferably 2 or more, more preferably 5 or more, but preferably 20 or less, more preferably 12 or less, still more preferably 10 or less, particularly preferably 9 or less metal filaments 1. In the illustrated examples, five metal filaments 1 that are aligned without being twisted together constitute the metal cord 2.

In the present invention, a minimum gap distance between the metal filaments 1 constituting the reinforcing element 2 is preferably 0.01 mm or more but less than 0.24 mm. By controlling the minimum gap distance between adjacent metal filaments 1 to be 0.01 mm or more, the elastomer 3 for belt layer is allowed to sufficiently infiltrate between the metal filaments 1. Meanwhile, by controlling the minimum gap distance to be less than 0.24 mm, the occurrence of separation between the metal filaments 1 can be inhibited. The minimum gap distance between the metal filaments 1 constituting the reinforcing element 2 is more preferably 0.03 mm to 0.20 mm, still more preferably 0.03 mm to 0.18 mm.

It is noted here that, when the reinforcing element 2 is the metal cord 2 composed of a bundle as illustrated, a gap w1 between the metal filaments 1 constituting the metal cord 2 corresponds to the above-described minimum gap distance.

Further, in the present invention, a maximum gap distance between the metal filaments 1 constituting the reinforcing element 2 is preferably 0.25 mm to 2.0 mm, more preferably 0.3 mm to 1.8 mm, still more preferably 0.35 mm to 1.5 mm. By controlling the maximum gap distance between the metal filaments 1 to be 0.25 mm or more, the occurrence of belt edge separation, in which rubber detachment originating from a cord end at a belt widthwise edge propagates between adjacent metal cords, can be inhibited. Meanwhile, by controlling the maximum gap distance between the metal filaments 1 to be 2.0 mm or less, the rigidity of the belt can be maintained.

It is noted here that, when the reinforcing element 2 is the metal cord 2 composed of a bundle as illustrated, a gap w2 between metal cords 2 corresponds to the above-described maximum gap distance.

In the present invention, an interlayer gauge, which is a distance between the surfaces of the metal filaments 1 embedded in the respective two belt layers 105a and 105b that are adjacent to one another inside the belt 105, is preferably 0.10 mm to 1.20 mm, more preferably 0.35 mm to 0.80 mm. By controlling the interlayer gauge to be 0.10 mm to 1.20 mm, a reduction in the interlayer strain and an effect of reducing the weight and the rolling resistance can be obtained in a well-balanced manner.

In the present invention, the metal filaments 1 preferably have a diameter of 0.15 mm to 0.40 mm. The diameter of the metal filaments 1 is more preferably 0.18 mm or larger, still more preferably 0.20 mm or lager, but preferably 0.35 mm or smaller. By controlling the diameter of the metal filaments 1 to be 0.40 mm or smaller, an effect of reducing the tire weight can be sufficiently obtained. Meanwhile, by controlling the diameter of the metal filaments 1 to be 0.15 mm or larger, a sufficient belt strength can be exerted.

In the present invention, the elastomer 3 can sufficiently infiltrate between adjacent metal filaments 1 but, from the standpoint of preventing a non-elastomer-coated region, which is a region not coated with an elastomer, from existing continuously between adjacent metal filaments, it is preferred that the following condition be satisfied. That is, when the reinforcing element 2 is the metal cord 2 composed of a bundle as illustrated, the elastomer coating ratio of adjacent metal filaments 1 in the metal cord 2 on a widthwise side surface of the metal cord 2 is preferably 10% or higher, more preferably 20% or higher, per unit length. The elastomer coating ratio is still more preferably 50% or higher, particularly preferably 80% or higher, most preferably 90% or higher. This enables not only to ensure corrosion propagation resistance in the belt layers, but also to improve the belt in-plane rigidity and thereby obtain a good steering stability-improving effect.

In the present invention, for example, when a rubber and a steel cord are used as the elastomer and the metal cord, respectively, and the steel cord is coated with the rubber, vulcanized, and then pulled out of the resulting rubber-steel cord composite, the term "elastomer coating ratio" refers to an average of values that are obtained by measuring the length of the metal cord widthwise side surfaces of steel filaments coated with the rubber infiltrated into gaps between the steel filaments constituting the steel cord, and subsequently performing a calculation based on the following equation:

$$\text{Elastomer coating ratio} = (\text{Rubber-coated length}/\text{Sample length}) \times 100 \ (\%)$$

It is noted here that the elastomer coating ratio can be calculated in the same manner also when an elastomer other than a rubber is used as the elastomer and when a metal cord other than a steel cord is used as the metal cord.

In the present invention, the "metal filaments 1" generally refer to wire-like metals that contain steel, namely iron, as a main component (the mass of iron exceeds 50% by mass with respect to a total mass of each metal filament), and the metal filaments 1 may consist of only iron, or may contain a metal other than iron, such as zinc, copper, aluminum, or tin.

In the present invention, the surface state of the metal filaments 1 is not particularly limited, and the metal filaments 1 may take, for example, the following form. That is, for example, the surface of each metal filament 1 contains N atoms in an amount of 2% by atom to 60% by atom and has a Cu/Zn ratio of 1 to 4. Further, in each metal filament 1, for example, the amount of phosphorus contained as an oxide in the filament outermost layer that constitutes a portion from the filament surface to 5 nm inward in the filament radial direction is 7.0% by atom or less in terms of the ratio with respect to the whole amount excluding the carbon (C) amount.

In the present invention, the surfaces of the metal filaments 1 may be treated by plating. The type of the plating is not particularly limited, and examples thereof include zinc (Zn) plating, copper (Cu) plating, tin (Sn) plating, brass (copper-zinc (Cu-Zn)) plating, bronze (copper-tin (Cu-Sn)) plating, and ternary alloy plating, such as copper-zinc-tin (Cu-Zn-Sn) plating and copper-zinc-cobalt (Cu-Zn-Co) plating. Thereamong, brass plating and copper-zinc-cobalt plating are preferred. A brass-plated metal filament exhibits excellent adhesion with a rubber. In the brass plating, the ratio of copper and zinc (copper:zinc) is usually 60:40 to 70:30 based on mass, and the copper-zinc-cobalt plating usually contains 60 to 75% by weight of copper and 0.5 to 10% by weight of cobalt. The thickness of the resulting plated layer is generally 100 nm to 300 nm.

In the present invention, the tensile strength and the cross-sectional shape of the metal filaments 1 are not particularly limited. For example, as the metal filaments 1, metal filaments having a tensile strength (filament strength) of 2,500 MPa (250 kg/mm$^2$) or higher can be used. By this, the amount of a metal used in the belt can be reduced and the noise performance can be improved while maintaining the durability of the tire. Further, the widthwise cross-sectional shape of the metal filaments 1 is also not particularly limited and may be, for example, true circular, elliptical, rectangular, triangular, or polygonal; however, it is preferably true circular. In the present invention, when the reinforcing element 2 is the metal cord 2 composed of a bundle as illustrated and it is necessary to restrain the bundle of the metal filaments 1 constituting the metal cord 2, a wrapping filament (spiral filament) may be wound around the metal filament bundle. In the present invention, the metal filaments 1 are not coated with a resin, and the surface of each metal filament is in direct contact with the elastomer.

The elastomer 3 is, for example, a rubber that is conventionally used for coating a metal cord, and examples thereof include: diene-based rubbers and hydrogenation products thereof, such as natural rubbers (NR), isoprene rubbers (IR), epoxidized natural rubbers, styrene-butadiene rubbers (SBR), butadiene rubbers (BR, high-cis BR and low-cis BR), nitrile rubbers (NBR), hydrogenated NBRs, and hydrogenated SBRs; olefin-based rubbers, such as ethylene-propylene rubbers (EPDM and EPM), maleic acid-modified ethylene-propylene rubbers (M-EPM), butyl rubbers (IIR), copolymers of isobutylene and an aromatic vinyl or diene monomer, acrylic rubbers (ACM), and ionomers; halogen-containing rubbers, such as Br-IIR, Cl-IIR, brominated isobutylene-p-methylstyrene copolymers (Br-IPMS), chloroprene rubbers (CR), hydrin rubbers (CHR), chlorosulfonated polyethylene rubbers (CSM), chlorinated polyethylene rubbers (CM), and maleic acid-modified chlorinated polyethylene rubbers (M-CM); silicone rubbers, such as methyl vinyl silicone rubber, dimethyl silicone rubber, and methylphenyl vinyl silicone rubber; sulfur-containing rubbers, such as polysulfide rubbers; fluororubbers, such as vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers; and thermoplastic elastomers, such as styrene-based elastomers, olefin-based elastomers, ester-based elastomers, urethane-based elastomers, and polyamide-based elastomers. These elastomers 3 may be used singly, or in combination of two or more thereof.

Further, in the elastomer 3, an age inhibitor, zinc oxide, stearic acid and the like that are usually used in rubber products such as tires and conveyor belts may be incorporated as appropriate, in addition to sulfur, a vulcanization accelerator, and carbon black.

In the present invention, a belt treat constituting the belt layer can be produced by any known method. For example, the belt treat can be produced by coating the reinforcing element 2, in which plural metal filaments 1 are arranged parallel at prescribed intervals, with the elastomer 3, or by coating the metal cord 2, which is composed of a bundle of plural metal filaments 1 that are aligned without being twisted together, with the elastomer 3.

In the present invention, the thickness of the belt treat constituting the belt layer is preferably more than 0.30 mm but less than 1.00 mm. By controlling the thickness of the belt treat to be in this range, a sufficient weight reduction of the belt can be achieved.

Next, the rubber composition constituting the base tread according to the present invention will be described.

In the present invention, the base tread of the tread portion 101 is formed of a rubber composition having a ratio 0°C tan$\delta$/30°C tan$\delta$ of 2.90 or higher, in which 0°C tan$\delta$ is a value of tan$\delta$ at 0°C, and in which 30°C tan$\delta$ is a value of tan$\delta$ at 30°.

Usually, a reduction in the tan$\delta$ leads to a problem that the level of pass-by noise is worsened although it can improve the rolling resistance of the tire, while an increase in the tan$\delta$ leads to deterioration of the rolling resistance although it can reduce the level of pass-by noise. In this respect, as a result of intensively studies focusing on the frequency range of the tan$\delta$ that affects the rolling resistance and thepass-by noise, the present inventor found that the rolling resistance tends to be improved by reducing the tan$\delta$ at low frequencies, and that it is preferred to increase the tan$\delta$ at high frequencies for improvement of the pass-by noise. Further, the present inventor discovered that, since it is difficult to measure the viscoelasticity at a high frequency due to the specifications of an apparatus, by increasing the ratio of the tan$\delta$ at 0°C with respect to the tan$\delta$ at 30°C based on temperature-frequency conversion (WLF law), specifically by setting the value of a ratio 0°C tan$\delta$/30°C tan$\delta$ between 0°C tan$\delta$, which is a value of tan$\delta$ at 0°C, and 30°C tan$\delta$, which is a value of tan$\delta$ at 30°C, to be 2.90 or larger, the pass-by noise can also be improved while achieving a low rolling resistance.

In the present invention, it is required that the value of the ratio 0°C tan$\delta$/30°C tan$\delta$ be 2.90 or larger and, when the value of the ratio 0°C tan$\delta$/30°C tan$\delta$ is smaller than 2.90, a low rolling resistance and a reduction in the pass-by noise cannot be achieved at the same time since a sufficient difference in frequency (difference in temperature) cannot be provided. From the same standpoint, the value of the ratio 0°C tan$\delta$/30°C tan$\delta$ is preferably 3.00 or larger, more preferably 3.1 or larger. Meanwhile, since a sufficient reduction in the rolling resistance is not expected when the value of the ratio 0°C tan$\delta$/30°C tan$\delta$ is excessively large, the value of the ratio 0°C tan$\delta$/30°C tan$\delta$ is preferably 6.0 or smaller.

In the present invention, the values of 0°C tan$\delta$ and 30°C tan$\delta$ mean the values of tan$\delta$ that are measured at 0°C and 30°C, respectively, after vulcanization of the above-described rubber composition according to the present invention. The measurement of 0°C tan$\delta$ and 30°C tan$\delta$ can be performed using, for example, spectrometer manufactured by Ueshima Seisakusho Co., Ltd.; however, a measurement method is not particularly limited as long as the values of tan$\delta$ at the respective temperatures can be accurately obtained, and the measurement can be performed using a measuring instrument that is normally used. Further, as the conditions of initial strain, dynamic strain, and frequency in the measurement of 0°C tan$\delta$ and 30°C tan$\delta$, for example, an initial strain of 2%, a dynamic strain of 1%, and a frequency of 10 Hz can be used.

The 30°C tan$\delta$ of the rubber composition according to the present invention is not particularly limited as long as it can satisfy the above-described relationship of the ratio 0°C tan$\delta$/30°C tan$\delta$; however, from the standpoint of achieving both a low rolling resistance and an improvement in the pass-by noise at higher levels, the 30°C tan$\delta$ is preferably 0.075 to 0.220, more preferably 0.100 to 0.170. The pass-by noise reducing performance can be further improved by controlling the 30°C tan$\delta$ to be 0.075 or more, while the rolling resistance can be further reduced by controlling the 30°C tan$\delta$ to be 0.220 or less.

Further, the 0°C tan$\delta$ of the rubber composition according to the present invention is also not particularly limited as long as it can satisfy the above-described relationship of the ratio 0°C tan$\delta$/30°C tan$\delta$; however, from the standpoint of achieving both a low rolling resistance and an improvement in the pass-by noise at higher levels, the 0°C tan$\delta$ is preferably 0.200 to 0.625, more preferably 0.300 to 0.500. The pass-by noise reducing performance can be further improved by controlling the 0°C tan$\delta$ to be 0.200 or more, while the rolling resistance can be further reduced by controlling the 0°C tan$\delta$ to be 0.625 or less.

In the present invention, a method of adjusting the value of the ratio 0°C tanδ/30°C tanδ is not particularly limited, and examples thereof include optimization of the components constituting the rubber composition according to the present invention. For example, as described below, the value of the ratio 0°C tanδ/30°C tanδ can be set in the range prescribed in the present invention by restricting the type and the content of a rubber component and/or adjusting the type and the content of a filler.

The components constituting the rubber composition according to the present invention are not particularly limited as long as the above-described relationship of the ratio 0°C tanδ/30°C tanδ can be satisfied. The type and the content of the rubber component and those of the filler can be adjusted as appropriate in accordance with the performance required for the base tread.

The rubber component of the rubber composition according to the present invention is not particularly limited; however, from the standpoints of easily satisfying the above-described relationship of the ratio 0°C tanδ/30°C tanδ and achieving both a low rolling resistance and an improvement in the pass-by noise at higher levels, the rubber component contains a styrene-butadiene rubber (SBR) having a styrene content of not less than 26% by mass. Further, from the same standpoints, the styrene content of the SBR is more preferably not less than 30% by mass, still more preferably not less than 39% by mass.

It is noted here that the styrene content of the SBR can be determined from an integral ratio of $^1$H-NMR spectrum.

Moreover, from the standpoint of achieving both a low rolling resistance and an improvement in the pass-by noise at higher levels, the content ratio of the SBR in the rubber component is preferably 10 to 80% by mass, more preferably 15 to 70% by mass, still more preferably 15 to 60% by mass, particularly preferably 20 to 45% by mass. When the content ratio of the SBR in the rubber component is 10% by mass or higher, the above-described relationship of the ratio 0°C tanδ/30°C tanδ is likely to be satisfied, so that a low rolling resistance and an improvement in the pass-by noise can both be achieved at higher levels.

The rubber composition according to the present invention preferably further contains a natural rubber (NR) as another rubber component, in addition to the above-described SBR. The reason for this is because the above-described relationship of the ratio 0°C tanδ/30°C tanδ is thereby likely to be satisfied, so that a low rolling resistance and an improvement in the pass-by noise can both be achieved at higher levels.

The rubber composition according to the present invention also preferably further contains a butadiene rubber (BR) as yet another rubber component, in addition to the above-described SBR and NR. The reason for this is because the above-described relationship of the ratio 0°C tanδ/30°C tanδ is thereby satisfied, so that a low rolling resistance and an improvement in the pass-by noise can both be achieved at higher levels.

Furthermore, from the standpoint of achieving both a low rolling resistance and an improvement in the pass-by noise more certainly, it is preferred that the rubber composition according to the present invention contain, as rubber components, 10 to 75% by mass of the NR, 10 to 75% by mass of the BR, and 15 to 60% by mass of the SBR, and it is more preferred that the rubber composition contain, as rubber components, 20 to 70% by mass of the NR, 10 to 60% by mass of the BR, and 20 to 45% by mass of the SBR.

It is noted here that, in the present invention, the above-described SBR, NR, and BR may each be unmodified or modified.

The rubber components used in the rubber composition according to the present invention may also contain a rubber component other than the above-described SBR, NR, and BR in accordance with the required performance. Examples of such other rubber components include: diene-based rubbers, such as isoprene rubber (IR), styrene-isoprene-butadiene rubber (SIBR), chloroprene rubber (CR), and acrylonitrile-butadiene rubber (NBR); and non-diene-based rubbers, such as ethylene-propylene-diene rubber (EPDM), ethylene-propylene rubber (EPM), and butyl rubber (IIR).

The presence or absence, the content, the type and the like of a filler contained in the rubber composition according to the present invention are not particularly limited, and can be modified as appropriate in accordance with the required performance. As the filler, for example, a carbon black, silica, or other inorganic filler can be incorporated.

The type of the carbon black is not particularly limited, and can be selected as appropriate in accordance with the required performance. As the carbon black, for example, a carbon black of FEF, SRF, HAF, ISAF, or SAF grade can be used.

The content of the carbon black in the rubber composition according to the present invention is preferably 25 to 65 parts by mass, more preferably 30 to 45 parts by mass, with respect to 100 parts by mass of the rubber component(s). Superior reinforcing property and crack propagation resistance can be obtained by controlling the content of the carbon black to be 25 parts by mass or more with respect to 100 parts by mass of the rubber component(s), while deterioration of the low heat build-up property can be inhibited by controlling the content of the carbon black to be 65 parts by mass or less.

The type of silica is not particularly limited, and examples thereof include wet silica, colloidal silica, calcium silicate, and aluminum silicate.

The rubber composition according to the present invention may contain a resin as well. Examples of the resin include C5 resins, C5/C9 resins, C9 resins, phenolic resins, terpene resins, and terpene-aromatic compound resins. These resins may be used singly, or in combination of two or more thereof.

In addition to the above-described rubber components and filler, the rubber composition according to the present invention may also contain other components to such an extent that does not impair the effects of the present invention. Examples of such other components include those additives that are usually used in the rubber industry, such a silane coupling agent, a softening agent, stearic acid, an age inhibitor, a vulcanizing agent such as sulfur, a vulcanization accelerator, and a vulcanization accelerator aid.

For example, when the rubber composition according to the present invention contains silica as the filler, the rubber composition preferably further contains a silane coupling agent. The reason for this is because the reinforcing property and the heat build-up reducing effect that are attributed to silica can thereby be further improved. As the silane coupling agent, any known silane coupling agent can be used as appropriate.

As the age inhibitor, any known age inhibitor can be used, and it is not particularly limited. Examples of the age inhibitor include phenolic age inhibitors, imidazole-based age inhibitors, and amine-based age inhibitors. These age inhibitors may be used singly, or in combination of two or more thereof.

As the vulcanization accelerator, any known vulcanization accelerator can be used, and it is not particularly limited. Examples of the vulcanization accelerator include: thiazole-based vulcanization accelerators, such as 2-mercaptobenzothiazole and dibenzothiazyl disulfide; sulfenamide-based vulcanization accelerators, such as *N*-cyclohexyl-2-benzothiazyl sulfenamide and *N-t*-butyl-2-benzothiazyl sulfenamide; guanidine-based vulcanization accelerators, such as diphenyl guanidine (e.g., 1,3-diphenyl guanidine); thiuram-based vulcanization accelerators, such as tetramethyl thiuram disulfide, tetraethyl thiuram disulfide, tetrabutyl thiuram disulfide, tetradodecyl thiuram disulfide, tetraoctyl thiuram disulfide, tetrabenzyl thiuram disulfide, and dipentamethylene thiuram tetrasulfide; dithiocarbamate-based vulcanization accelerators, such as zinc dimethyldithiocarbamate; and zinc dialkyldithiophosphates.

Examples of the vulcanization accelerator aid include zinc white (ZnO) and a fatty acid. The fatty acid may be any linear or branched fatty acid that is saturated or unsaturated, and the number of carbon atoms of the fatty acid is not particularly limited. Examples of such a fatty acid include fatty acids having 1 to 30 carbon atoms, preferably 15 to 30 carbon atoms, more specifically naphthenic acids, such as cyclohexanoic acid (cyclohexanecarboxylic acid) and alkylcyclopentanes having a side chain; saturated fatty acids, such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids, such as methacrylic acid, oleic acid, linoleic acid, and linolenic acid; and resin acids, such as rosin, tall oil acid, and abietic acid. These vulcanization accelerator aids may be used singly, or in combination of two or more thereof. In the present invention, zinc oxide and stearic acid can be suitably used.

In the tire of the present invention, the constitution of a cap tread arranged on the base tread of the tread portion is not particularly limited. Any known cap tread can be used as appropriate in accordance with the performance required for the tire. A rubber composition constituting the cap tread may contain, for example, a rubber component, a reinforcing filler, a softening agent, and additives that are usually used in the rubber industry.

In the tread portion of the tire of the present invention, from the standpoint of further improving the balance between the rolling resistance and the pass-by noise of the tire, a cap tread is formed on the base tread, and a ratio E'c/E'b between the storage elastic modulus E'c of the cap tread and the storage elastic modulus E'b of the base tread is preferably 0.25 to 0.75, more preferably 0.30 to 0.70.

Further, depending on the type of the tire to be applied, the tire of the present invention may be produced by molding an unvulcanized rubber composition and subsequently vulcanizing the thus molded composition, or by molding a semi-vulcanized rubber obtained through the pre-vulcanization step and the like and subsequently fully vulcanizing the thus molded rubber.

The tire 100 of the present invention is not particularly limited, except that the above-described prescribed belt and base tread are used. For example, a belt reinforcing layer may be arranged on the tire radial-direction outer side of the belt 105, and other reinforcing members may be used as well. In addition, a bead core 106 may be arranged in each of the pair of the bead portions 103, and the carcass 104 is usually wound around the bead core 106 from the inside to the outside and thereby anchored. Further, although not illustrated in the drawing, a bead filler having a tapered cross-sectional shape may be arranged on the tire radial-direction outer side of the bead core 106. Still further, as a gas filled into the tire 100, normal air or an air having an adjusted oxygen partial pressure, as well as an inert gas such as nitrogen, argon, or helium, can be used.

Moreover, in the present invention, the carcass 104 may be composed of plural carcass layers, and an organic fiber cord extending in a direction substantially perpendicular to the tire circumferential direction, for example, at an angle of 70° to 90°, can be suitably used. In the belt 105, the cord angle can be 30° or smaller with respect to the tire circumferential direction.

In the present invention, the type of the tire is not limited, and the illustrated tire is a tire for a passenger vehicle; however, the present invention can be applied to any tire, such as a tire for a truck or a bus, or a large-sized tire.

EXAMPLES

The present invention will now be described in more detail by way of Examples.

(Preparation of Rubber Compositions)

In accordance with the respective formulations shown in Table 1 below, rubber compositions A to C for base tread were prepared using an ordinary Banbury mixer. It is noted here that the amount of each component shown in Table 1 below indicates an amount (parts by mass) with respect to 100 parts by mass of rubber components.

The thus obtained rubber compositions A to C for base tread were vulcanized at 160°C for 15 minutes and, for each of the resulting vulcanized rubbers, the loss tangent tanδ at 0°C and 30°C as well as the storage elastic modulus E' were measured using a spectrometer manufactured by Ueshima Seisakusho Co., Ltd. under the following conditions: an initial strain of 2%, a dynamic strain of 1%, and a frequency of 10 Hz. The thus measured 0°C tanδ, 30°C tanδ, and E', as well as the calculated value of the ratio 0°C tanδ/30°C tanδ are shown together in Table 1 below.

[Table 1]

| Rubber composition for base tread | | A | B | C |
|---|---|---|---|---|
| Formulation | NR | 85 | 15.2 | 55 |
| | BR*1 | 15 | - | 15 |
| | SBR(1)*2 | - | 48.6 | - |
| | SBR(2)*3 | - | - | 30 (41.25) |
| | SBR(3)*4 | - | 36.2 (49.8) | - |
| | Carbon black (1)*5 | 40 | - | 40 |
| | Carbon black (2)*6 | - | 54 | - |
| | Stearic acid | 2 | 2 | 2 |
| | Age inhibitor*7 | 1 | 1 | 1 |
| | Zinc oxide*8 | 1 | 1 | 1 |
| | Vulcanization accelerator*9 | 1 | 1 | 1 |
| | Sulfur | 0.5 | 0.5 | 0.5 |
| Physical property values | 0°C tanδ | 0.172 | 0.644 | 0.457 |
| | 30°C tanδ | 0.073 | 0.227 | 0.137 |
| | Ratio 0°C tanδ/30°C tanδ | 2.37 | 2.83 | 3.33 |
| | E' | 10.0 | 10.0 | 10.0 |

*1) "BR01" manufactured by JSR Corporation

*2) "SL563" manufactured by JSR Corporation, styrene content: 20% by mass

*3) "HP755B" manufactured by JSR Corporation, styrene content: 40% by mass; the value shown in parentheses in Table 1 is an amount (parts by mass) as an oil-extended rubber

*4) "0122" manufactured by JSR Corporation, styrene content: 38% by mass; the value shown in parentheses in Table 1 is an amount (parts by mass) as an oil-extended rubber

*5) "ASAHI #65" manufactured by Asahi Carbon Co., Ltd.

*6) "ASAHI #70" manufactured by Asahi Carbon Co., Ltd.

*7) N-(1,3-dimethylbutyl)-N'-phenyl-p-phenylenediamine, "NOCRAC 6C" manufactured by Ouchi Shinko Chemical Industrial Co., Ltd.

*8) "HAKUSUI TECH" manufactured by Kyushu Hakusui Corporation

*9) dibenzothiazyl disulfide, "NOCCELER DM-P" manufactured by Ouchi Shinko Chemical Industrial Co., Ltd.

(Production of Rubber-Steel Cord Composites)

As reinforcing elements according to the respective conditions shown in Table 2 below, steel cords were covered from both above and below with sheets that were made of a rubber composition and had a thickness of about 0.5 mm, whereby rubber-steel cord composites to be used for belt layers were produced. The rubber composition for coating was prepared by blending and kneading components in accordance with a conventional method. The thus obtained rubber-steel cord composites were each vulcanized at 160°C for 20 minutes and evaluated as described below.

It is noted here that the reinforcing element of Example 1 is a cord constituted by a steel filament bundle composed of seven steel filaments of 0.24 mm in diameter that are aligned in a single row without being twisted together; the reinforcing element of Example 2 is a cord constituted by a steel filament bundle composed of five steel filaments of 0.26 mm in diameter that are aligned in a single row without being twisted together; and the reinforcing element of Example 3 is a cord constituted by a steel filament bundle composed of three steel filaments of 0.3 mm in diameter that are aligned in a single row without being twisted together.

Further, with regard to Comparative Examples 1 to 3, the following evaluations were performed based on data estimated under the respective conditions shown in Table 2 below. The reinforcing element of Comparative Example 1 is a twisted cord having an elliptical cross-sectional shape with a minor axis of 0.53 mm and a major axis of 0.64 mm, in which steel filaments are twisted together in a (2+3) structure. The reinforcing element of Comparative Example 2 is a cord in which steel filaments of 0.3 mm in diameter, which are aligned in a single row without being twisted together, are arranged evenly. The reinforcing element of Comparative Example 3 is a twisted cord having an elliptical cross-sectional shape with a minor axis of 0.53 mm and a major axis of 0.64 mm, in which steel filaments are twisted together in a (2+3) structure. In Comparative Example 3, the reinforcing element and its implantation condition were the same as in Comparative Example 1; however, the thickness of the rubber-steel cord composite was reduced (low gauge) as compared to Comparative Example 1.

<Rubber Amount>

The amount of rubber contained in a belt layer produced from each rubber-steel cord composite was determined as an index value, taking Comparative Example 1 as a reference of 100. A smaller value means superior and more favorable lightweightness. The results are shown in Table 2.

<Belt In-Plane Rigidity>

Using intersecting belt layer samples produced from the respective rubber-steel cord composites, the in-plane rigidity was evaluated as an index of steering stability. The belt angle was set at ±28° with respect to the tire circumferential direction. A jig was set on each of two spots underneath and one spot on top of each intersecting belt layer sample, and a load applied to the sample when the jig was pressed at one spot on top was evaluated as the in-plane rigidity. The results were determined as index values, taking Comparative Example 1 as a reference of 100. A larger value means superior steering stability. The results are shown in Table 2.

(Evaluation Using Tires)

Passenger vehicle tires illustrated in FIG. 1 having a size of 195/65R15 were produced by applying the respective rubber-steel cord composites to two belt layers. The belt angle was set at ±28° with respect to the tire circumferential direction. The rubber compositions for base tread shown in Table 2 below were each applied to the base tread of the tread portion.

<Separation Resistance>

For the tires in which the respective rubber-steel cord composites were applied to the belt layers, the separation length was measured after evaluation using a drum tester. The separation length was evaluated as "◎" when it was shorter, "o" when it was equivalent, "△" when it was slightly longer, or "×" when it was larger, as compared to Comparative Example 1. The results are shown in Table 2.

<Rolling Resistance>

Taking Comparative Example 1 as a reference (control), the rolling resistance of each test tire was determined as an estimated value. The results are denoted as "▲" when the rolling resistance was reduced as compared to Comparative Example 1. The results are shown in Table 2.

[Table 2]

| | | Comparative Example 1 | Comparative Example 2 | Comparative Example 3 | Example 1 | Example 2 | Example 3 |
|---|---|---|---|---|---|---|---|
| Rubber composition for base tread | | A | A | B | C | C | C |
| Belt | Reinforcing element | 2+3 | 0.3 (evenly arranged) | 2+3 (LG) | bundle of 0.24 × 7 filaments | bundle of 0.26 × 5 filaments | bundle of 0.3 × 3 filaments |
| | Filament diameter* (mm) | minor axis: 0.53 major axis: 0.64 | 0.3 | minor axis: 0.53 major axis: 0.64 | 0.24 | 0.26 | 0.3 |
| | Minimum gap distance between filaments* (mm) | 0.47 | 0.31 | 0.47 | 0.1 | 0.15 | 0.15 |
| | Maximum gap distance between filaments* (mm) | 0.91 | 0.31 | 0.91 | 0.66 | 0.48 | 0.64 |
| Rubber amount (index) | | 100 | 75 | 93 | 75 | 75 | 75 |
| Evaluation results | Belt in-plane rigidity (index) | 100 | 100 | 100 | 110 | 110 | 110 |
| | Separation resistance | ○ | × | △ | ○ | ◎ | ○ |
| | Rolling resistance | control | ▲3% | ▲3% | ▲5% | ▲5% | ▲5% |

*) For Comparative Examples 1 and 3, the values mean the cord diameter of twisted cords having a (2+3) structure and the gap between the cords.

It is estimated that the pass-by noise is reduced in all of the test tires of Examples 1 to 3 as compared to Comparative Examples 1 to 3.

DESCRIPTION OF SYMBOLS

1, 1a, 1b, 1c: metal filament
2, 2A, 2B: reinforcing element (metal cord)
3: elastomer
100: tire
101: tread portion
102: side wall portion
103: bead portion
104: carcass
105: belt
105a, 105b: belt layer
106: bead core

## Claims

1. A tire (100), comprising a belt (105) comprising at least one belt layer (105a, 105b) in a tread portion (101) that forms a ground-contact part, wherein

   the belt layer (105a, 105b) is formed by coating a reinforcing element (2,2A,2B), which comprises plural metal filaments (1, 1a, 1b, 1c) that are aligned in a single row without being twisted together, with an elastomer (3), **characterized in that** a base tread of the tread portion (101) comprises a rubber composition having a ratio 0°C tan$\delta$/30°C tan$\delta$ of 2.90 or higher, in which 0°C tan$\delta$ is a value of tan$\delta$ at 0°C, and in which 30°C tan$\delta$ is a value of tan$\delta$ at 30°C, wherein tan $\delta$ at 0°C and tan $\delta$ at 30°C are measured using a spectrometer under the conditions of initial strain of 2%, dynamic strain of 1%, and frequency of 10 Hz, wherein the rubber composition comprises, as a rubber component, a styrene-butadiene rubber having a styrene content of not less than 26% by mass.

2. The tire (100) according to claim 1, wherein the reinforcing element (2,2A,2B) is a metal filament bundle comprising 2 to 20 metal filaments (1, 1a, 1b, 1c).

3. The tire (100) according to claim 1 or 2, wherein a minimum gap distance between the metal filaments (1,1a,1b,1c) is 0.01 mm or more but less than 0.24 mm.

4. The tire (100) according to any one of claims 1 to 3, wherein a maximum gap distance between the metal filaments (1,1a,1b,1c) is 0.25 mm to 2.0 mm.

5. The tire (100) according to any one of claims 1 to 4, wherein the metal filaments (1,1a,1b,1c) have a diameter of 0.15 mm to 0.40 mm.

6. The tire (100) according to any one of claims 1 to 5, wherein the 30°C tan6 is 0.075 to 0.220.

7. The tire (100) according to any one of claims 1 to 6, wherein the 0°C tan$\delta$ is 0.200 to 0.625.

8. The tire (100) according to any one of claims 1 to 7, wherein the rubber composition further comprises a natural rubber as a rubber component.

9. The tire (100) according to any one of claims 1 to 8, wherein the rubber composition further comprises a butadiene rubber as a rubber component.

10. The tire (100) according to claim 9, wherein the rubber composition comprises, as rubber components, 10 to 75% by mass of the natural rubber, 10 to 75% by mass of the butadiene rubber, and 15 to 60% by mass of the styrene-butadiene rubber.

## Patentansprüche

1. Reifen (100), umfassend einen Gürtel (105), der mindestens eine Gürtelschicht (105a, 105b) in einem Laufflächenabschnitt (101) umfasst, der einen Bodenkontaktteil bildet, wobei

   die Gürtelschicht (105a, 105b) durch Beschichten eines Verstärkungselements (2, 2A, 2B), das mehrere Metallfilamente (1, 1a, 1b, 1c) umfasst, die in einer einzigen Reihe ausgerichtet sind, ohne miteinander verdreht zu sein, mit einem Elastomer (3) gebildet wird, **dadurch gekennzeichnet, dass**, eine Basislauffläche des Laufflächenabschnitts (101) eine Kautschukzusammensetzung umfasst, die ein Verhältnis 0 °C tan$\delta$/30 °C tan$\delta$ von 2,90 oder höher aufweist, bei dem 0 °C tan$\delta$ ein Wert von tan$\delta$ bei 0 °C ist, und bei dem 30 °C tan$\delta$ ein Wert von tan$\delta$ bei 30 °C ist, wobei tan$\delta$ bei 0 °C und tan$\delta$ bei 30 °C unter Verwendung eines Spektrometers unter den Bedingungen einer anfänglichen Dehnung von 2 %, einer dynamischen Dehnung von 1 % und einer Frequenz von 10 Hz gemessen werden, wobei die Kautschukzusammensetzung als eine Kautschukkomponente einen Styrol-Butadien-Kautschuk mit einem Styrolgehalt von nicht weniger als 26 Massen-% umfasst.

**2.** Reifen (100) nach Anspruch 1, wobei das Verstärkungselement (2, 2A, 2B) ein Metallfilamentbündel ist, das 2 bis 20 Metallfilamente (1, 1a, 1b, 1c) umfasst.

**3.** Reifen (100) nach Anspruch 1 oder 2, wobei ein minimaler Spaltabstand zwischen den Metallfilamenten (1, 1a, 1b, 1c) 0,01 mm oder mehr, jedoch weniger als 0,24 mm beträgt.

**4.** Reifen (100) nach einem der Ansprüche 1 bis 3, wobei ein maximaler Spaltabstand zwischen den Metallfilamenten (1, 1a, 1b, 1c) 0,25 mm bis 2,0 mm beträgt.

**5.** Reifen (100) nach einem der Ansprüche 1 bis 4, wobei die Metallfilamente (1, 1a, 1b, 1c) einen Durchmesser von 0,15 mm bis 0,40 mm aufweisen.

**6.** Reifen (100) nach einem der Ansprüche 1 bis 5, wobei der tanδ-Wert bei 30 °C 0,075 bis 0,220 beträgt.

**7.** Reifen (100) nach einem der Ansprüche 1 bis 6, wobei der tanδ-Wert bei 0 °C 0,200 bis 0,625 beträgt.

**8.** Reifen (100) nach einem der Ansprüche 1 bis 7, wobei die Kautschukzusammensetzung ferner einen Naturkautschuk als eine Kautschukkomponente umfasst.

**9.** Reifen (100) nach einem der Ansprüche 1 bis 8, wobei die Kautschukzusammensetzung ferner einen Butadien-Kautschuk als eine Kautschukkomponente umfasst.

**10.** Reifen (100) nach Anspruch 9, wobei die Kautschukzusammensetzung als Kautschukkomponenten 10 bis 75 Massen-% Naturkautschuk, 10 bis 75 Massen-% Butadien-Kautschuk und 15 bis 60 Massen-% Styrol-Butadien-Kautschuk umfasst.

## Revendications

**1.** Pneu (100) comprenant une ceinture (105) comprenant au moins une couche de ceinture (105a, 105b) dans une partie de bande de roulement (101) qui forme une partie de contact avec le sol,
dans lequel

la couche de ceinture (105a, 105b) est formée en revêtant un élément de renfort (2, 2A, 2B), qui comprend plusieurs filaments de métal (1, 1a, 1b, 1c) qui sont alignés dans une seule rangée sans être torsadés ensemble, avec un élastomère (3), **caractérisé en ce que**
une bande de roulement de base de la partie de bande de roulement (101) comprend une composition de caoutchouc ayant un rapport tan δ 0 °C/tan δ 30 °C supérieur ou égal à 2,90, dans lequel tan δ 0 °C est une valeur de tan δ à 0 °C, et dans lequel tan δ 30 °C est une valeur de tanδ à 30 °C, dans lequel le tan δ à 0 °C et le tan δ à 30 °C sont mesurés au moyen d'un spectromètre dans les conditions de déformation initiale de 2 %, de déformation dynamique de 1 % et de fréquence de 10 Hz, dans lequel la composition de caoutchouc comprend, en tant que composant de caoutchouc, un caoutchouc de styrène-butadiène ayant une teneur en styrène qui n'est pas inférieure à 26 % en masse.

**2.** Pneu (100) selon la revendication 1, dans lequel l'élément de renfort (2, 2A, 2B) est un faisceau de filaments de métal comprenant 2 à 20 filaments de métal (1, 1a, 1b, 1c).

**3.** Pneu (100) selon la revendication 1 ou 2, dans lequel une distance d'espacement minimale entre les filaments de métal (1, 1a, 1b, 1c) est égale ou supérieure à 0,01 mm, mais inférieure à 0,24 mm.

**4.** Pneu (100) selon l'une quelconque des revendications 1 à 3, dans lequel une distance d'espacement maximale entre les filaments de métal (1, 1a, 1b, 1c) est de 0,25 mm à 2,0 mm.

**5.** Pneu (100) selon l'une quelconque des revendications 1 à 4, dans lequel les filaments de métal (1, 1a, 1b, 1c) ont un diamètre de 0,15 mm à 0,40 mm.

**6.** Pneu (100) selon l'une quelconque des revendications 1 à 5, dans lequel le tan δ 30 °C est de 0,075 à 0,220.

**7.** Pneu (100) selon l'une quelconque des revendications 1 à 6, dans lequel le tan $\delta$ 0 °C est de 0,200 à 0,625.

**8.** Pneu (100) selon l'une quelconque des revendications 1 à 7, dans lequel la composition de caoutchouc comprend en outre un caoutchouc naturel en tant que composant de caoutchouc.

**9.** Pneu (100) selon l'une quelconque des revendications 1 à 8, dans lequel la composition de caoutchouc comprend en outre un caoutchouc de butadiène en tant que composant de caoutchouc.

**10.** Pneu (100) selon la revendication 9, dans lequel la composition de caoutchouc comprend, en tant que composants de caoutchouc, 10 à 75 % en masse du caoutchouc naturel, 10 à 75 % en masse du caoutchouc de butadiène et 15 à 60 % en masse du caoutchouc de styrène-butadiène.

FIG. 1

FIG. 2

FIG. 3

FIG. 4

2A

1a

1b

FIG. 5

2B

1c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013206302 A1
- JP 2010247738 A
- WO 2016098505 A1
- JP H01174547 A
- JP 2010053495 A
- JP 2012106570 A
- JP 2016006135 A